# FASCICULE DE BREVET EUROPEEN

(11) **EP 1 153 811 B1**
(45) Date de publication et mention de la délivrance du brevet: **26.11.2003**
(21) Numéro de dépôt: 01119204.4
(22) Date de dépôt: 18.03.1996
(51) Int. Cl.: B60R 25/04

(54) **Antivol électrique, notamment pour un véhicule automatique**
Elektrische Diebstahlsicherung, insbesondere für ein Kraftfahrzeug
Electric anti-theft device, especially for a motor vehicle

(30) Priorité: 21.03.1995 FR 9503394
(43) Date de publication de la demande: 14.11.2001
(62) Demande divisionnaire de: 96400555.7
(73) Titulaire: VALEO SECURITE HABITACLE S.A.S., 94042 Créteil Cédex (FR)
(72) Inventeur: Peyre, Jean, c/o Valeo Sécurité Habitacle, 94042 Créteil (FR); Humbert, Arnaud, c/o Valeo Sécurité Habitacle, 94042 Créteil (FR); Demouy, Olivier, c/o Valeo Sécurité Habitacle, 94042 Créteil (FR)
(74) Mandataire: Hervouet, Sylvie

(56) Documents cités:
- DE-C- 836 750
- US-A- 1 798 917
- US-A- 3 735 833

## Description

La présente invention concerne un antivol électrique, notamment pour un véhicule automobile.

Il a déjà été proposé des dispositifs permettant de déverrouiller à distance et donc sans contact ni électrique, ni mécanique, les ouvrants d'un objet et notamment d'un véhicule automobile. En particulier, on a développé des techniques d'accès sans clef qui permettent d'accéder à des ressources sans avoir à sortir une clef mécanique, ou équivalente, d'autorisation de l'accès.

Un tel système est très attractif par le confort qu'il apporte à l'usager et par les possibilités de gestion des accès par des moyens informatiques qu'il permet.

Dans l'application au verrouillage et au déverrouillage d'ouvrants, comme ceux d'un véhicule automobile, ou d'un antivol de sécurité comme celui d'une colonne de direction, ou de l'arbre de sortie de la boîte de vitesses d'un véhicule, on a dans cette optique proposé des systèmes mécaniques utilisant des organes moteurs de type électrique tels qu'un moteur électrique tournant ou un électroaimant.

Quand le système de gestion des accès reconnaît le droit d'accès et une demande d'accès, un organe de commande produit un ordre actionnement qui excite l'organe moteur électrique. L'antivol et/ou le verrou change d'état en passant de l'état verrouillé à l'état déverrouillé.

Une séquence analogue inverse se produit pour la sortie et/ou l'activation de l'antivol.

Selon une conception connue, décrite et représentée dans la demande de brevet français FR 27 10599 du 30/09/1993 (préambule de la revendication 1), il a déjà été proposé un procédé de contrôle d'un antivol de véhicule automobile, notamment avec système d'accès par commande à distance, faisant notamment appel à un commutateur de commande de démarrage et d'alimentation électrique des accessoires du véhicule et du circuit d'allumage du moteur du véhicule.

Selon le procédé, dans une phase de désactivation de l'antivol, on accède au véhicule, par exemple avec une télécommande, on manoeuvre un commutateur qui reproduit en la simulant la manipulation des clefs mécaniques habituelles, on détecte une position déterminée du commutateur pour produire une interrogation d'identification de la demande de déverrouillage de l'antivol, on produit en réponse un ordre d'activation de positions successives du commutateur et un ordre de déverrouillage de l'antivol.

Dans une phase d'activation de l'antivol, on détecte une manoeuvre d'activation de l'antivol sur le commutateur, cette manoeuvre reproduisant les manipulations habituelles des clefs mécaniques, on active l'antivol, on désactive les positions successives du commutateur.

Pour la mise en place d'un tel procédé, il est fait appel à un antivol du type comportant :
- un commutateur d'antivol pour la commande du démarrage du moteur du véhicule et de l'alimentation de différents circuits électriques du véhicule ;
- un antivol motorisé comportant un moteur électrique d'entraînement d'un organe de blocage entre une position verrouillée et une position déverrouillée, par inversion des polarités des bornes d'alimentation du moteur, par exemple à travers un bloc d'alimentation électrique du moteur ;
- et du type dans lequel le commutateur d'antivol comporte
   - un interrupteur de clef pour détecter la simulation de l'introduction d'une clef dans le commutateur d'antivol ;
   - et un interrupteur de commande à positions multiples pour commander en séquence l'alimentation de plusieurs circuits électriques du véhicule et du démarreur, comportant un contact mobile de commande relié à une polarité d'une source d'alimentation électrique, et une série de contacts fixes, avec lesquels le contact mobile de commande entre successivement en contact lors de la manoeuvre du commutateur en vue de provoquer le démarrage du véhicule.

Dans la conception décrite et représentée dans ce document, l'antivol comporte également une centrale d'antivol connectée aux éléments précédents pour mettre en oeuvre un procédé de contrôle de l'antivol. La centrale d'antivol comporte notamment un microprocesseur qui assure la gestion du procédé de contrôle de l'antivol.

La présente invention a pour but de proposer une nouvelle conception d'un antivol électrique du type mentionné précédemment, qui assure toutes les fonctions souhaitées, avec la fiabilité requise, mais sans qu'il soit nécessaire de faire appel à une centrale d'antivol réalisée sous la forme d'un microprocesseur, c'est-à-dire une conception dans laquelle la logique de commande du verrouillage et du déverrouillage de l'antivol est réalisée sous la forme d'une logique câblée et protégée.

Dans ce but, l'invention propose un antivol électrique du type mentionné précédemment, caractérisé en ce que le moteur électrique de l'antivol motorisé comporte :
- une première borne d'alimentation qui est reliée à une première polarité de la source d'alimentation à travers l'interrupteur de clef et en l'absence de clef, ou qui est reliée à la seconde polarité de la source d'alimentation à travers l'interrupteur de clef, en présence de clef, et à travers des moyens de détection de l'état de l'antivol, lorsque l'antivol n'est pas en position déverrouillée ;
- et une seconde borne d'alimentation qui est reliée à la première polarité de la source d'alimentation à travers l'interrupteur de clef et en présence de clef, ou qui est reliée à la seconde polarité de la source d'alimentation à travers l'interrupteur de clef, en l'absence de clef, et à travers lesdits moyens de détection de l'état de l'antivol, lorsque l'antivol n'est pas en position verrouillée.

Selon d'autres caractéristiques de l'invention :
- l'interrupteur de clef comporte deux paires de contacts mobiles montés mobiles simultanément entre une première position correspondant à l'absence de clef et une seconde position correspondant à la présence de clef, parmi lesquelles
- une première paire de contacts mobiles dont un premier contact mobile est relié à la première polarité de la source d'alimentation et est susceptible de coopérer, en l'absence de clef, avec un contact fixe relié en permanence à la première borne d'alimentation du moteur et au second contact mobile de cette première paire qui, en présence de clef, est susceptible de coopérer avec un premier plot de sortie des moyens de détection de l'état de l'antivol qui est relié à la seconde polarité de la source d'alimentation lorsque l'antivol n'est pas en position déverrouillée ;
- et une seconde paire de contacts mobiles dont un premier contact mobile est relié à la première polarité de la source d'alimentation et susceptible de coopérer, en présence de clef, avec un contact fixe relié en permanence à la seconde borne d'alimentation et au contact mobile de cette seconde paire qui, en l'absence de clef, est susceptible de coopérer avec un second plot de sortie des moyens de détection de l'état de l'antivol qui est relié à la seconde polarité de la source d'alimentation lorsque l'antivol n'est pas en position verrouillée ;
- les moyens de détection de l'antivol comportent un contact mobile relié à la seconde polarité de la source d'alimentation et qui est susceptible de coopérer avec le premier plot fixe de sortie lorsque l'antivol n'est pas en position déverrouillée, et de coopérer avec le second plot fixe de sortie lorsque l'antivol n'est pas en position verrouillée ;
- les premiers et seconds plots de sortie sont des pistes conductrices adjacentes et le contact mobile des moyens de détection de l'état de l'antivol est lié en rotation à l'arbre de sortie du moteur de l'antivol ;
- les moyens de détection de l'état de l'antivol comportent :
   - un interrupteur de détection du déverrouillage de l'antivol qui comporte un contact mobile relié audit premier plot de sortie et qui est susceptible de coopérer avec un contact fixe reliée à la seconde polarité de la source d'alimentation lorsque l'antivol n'est pas en position déverrouillée ;
   - et un interrupteur de détection du verrouillage de l'antivol qui comporte un contact mobile relié audit second plot de sortie et qui est susceptible de coopérer avec un contact fixe relié à la seconde polarité de la source d'alimentation lorsque l'antivol n'est pas en position verrouillée ;
- l'un au moins des contacts fixes de l'interrupteur de commande à positions multiples du commutateur d'antivol est relié au circuit électrique associé du véhicule par une disposition d'inhibition qui n'établit l'alimentation électrique de ce circuit que lorsque l'antivol est en position déverrouillée ;
- le dispositif d'inhibition est un interrupteur d'inhibition dont le contact mobile est relié audit contact fixe de l'interrupteur de commande et coopère avec un plot fixe relié audit circuit électrique lorsque l'antivol est en position déverrouillée ;
- le contact mobile de commande l'interrupteur de commande à positions multiples du commutateur d'antivol est relié à une polarité de la source d'alimentation par un dispositif d'inhibition qui n'établit la liaison électrique que lorsque l'antivol est en position déverrouillée ;
- le dispositif d'inhibition est un interrupteur d'inhibition dont le contact mobile est relié à une polarité de la source d'alimentation et coopère avec un plot fixe relié au contact mobile de commande lorsque l'antivol est en position déverrouillée ;
- le contact mobile de l'interrupteur d'inhibition est lié en rotation au moteur de l'antivol motorisé ;
- le commutateur d'antivol est un commutateur rotatif.

D'autres caractéristiques et avantages de l'invention apparaîtront à la lecture de la description détaillée qui va suivre pour la compréhension de laquelle on se reportera aux dessins annexés dans lesquels :
- La figure 1 est un schéma illustrant un principe de réalisation d'un antivol selon l'état de la technique comportant notamment une centrale électronique d'antivol;
- la figure 2 est un schéma qui illustre un premier mode de réalisation d'un antivol selon l'invention sur lequel l'antivol électrique est représenté à l'état verrouillé ;
- la figure 3 est un schéma similaire à celui de la figure 2 sur lequel l'antivol électrique est à l'état verrouillé mais après la simulation de l'introduction d'une clef ;
- la figure 4 est un schéma similaire à celui de la figure 3 sur lequel l'antivol électrique passe de l'état verrouillé à l'état déverrouillé ;
- la figure 5 est un schéma similaire à celui de la figure 4 sur lequel l'antivol électrique est représenté à l'état déverrouillé ;
- la figure 6 est un schéma similaire à celui de la figure 5 sur lequel l'antivol électrique est représenté à l'état déverrouillé après simulation du retrait d'une clef ;
- la figure 7 est un schéma similaire à celui de la figure 6 sur lequel l'antivol passe de l'état déverrouillé à l'état verrouillé ; et
- les figures 8 à 13 sont des schémas similaires à ceux des figures 2 à 7 qui illustrent un second mode de réalisation d'un antivol conforme aux enseignements de l'invention.

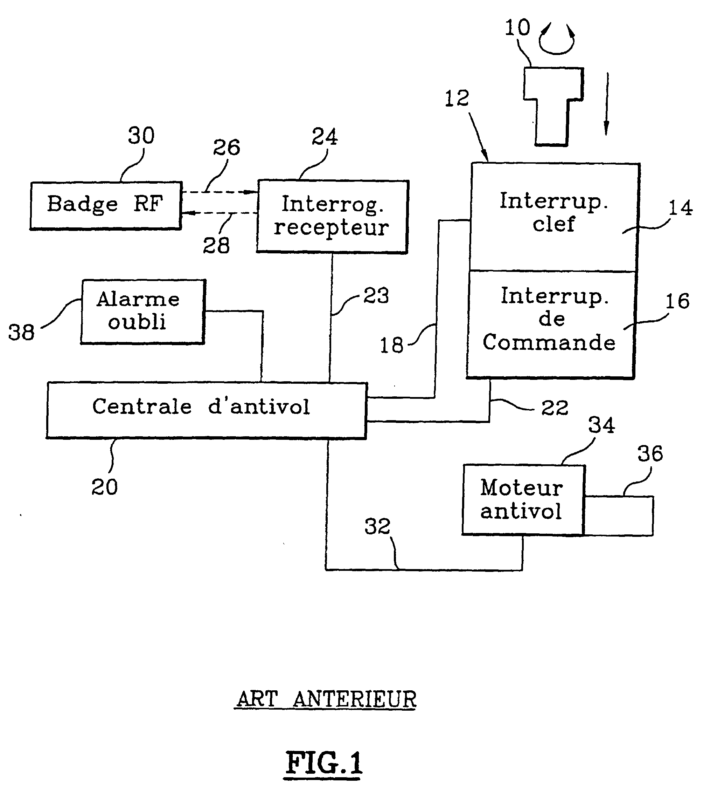

L'antivol 10 selon l'état de la technique schématisé à la figure 1 comporte une clef 10, ou une fausse clef, qui est destinée à venir s'introduire dans le canon, ou un faux canon, d'un commutateur d'antivol 12.

Le commutateur est prévu pour équiper le tableau de bord du véhicule et sa conception est de type sensiblement proche de celle du commutateur de démarrage d'un véhicule selon l'état de la technique.

L'utilisateur manoeuvre la clef de contact 10.

La clef de contact 10 est en fait une fausse clef en ce qu'elle n'agit pas nécessairement sur une serrure mécanique, bien qu'une telle clef réelle associée à une serrure apporte un degré supplémentaire de sécurité en ajoutant un moyen de verrouillage ou de déverrouillage supplémentaire en chaîne avec la conception générale d'un antivol électrique.

Le commutateur d'antivol 10 comporte un interrupteur de clef 14 qui est destiné à détecter l'absence de la clef 10 ou la présence en position introduite de cette dernière.

Le commutateur 12 comporte également un interrupteur de commande à positions multiples 16 pour la commande du démarrage du moteur du véhicule et pour la commande de l'alimentation de différents circuits électriques du véhicule tels que notamment le circuit d'allumage du moteur.

L'interrupteur de clef 14 est relié par une ligne 18 à une entrée d'une centrale d'antivol 20 tandis que l'interrupteur de commande 16 est relié par une ligne 22 à une autre entrée de la centrale d'antivol 20, ou des opérations équivalentes de simulation.

La centrale d'antivol 20 comporte un circuit d'analyse qui est notamment capable de lire les positions qu'occupent les interrupteurs 14 et 16 du commutateur 12.

La centrale d'antivol selon l'état de la technique comporte par exemple un microcontrôleur tel qu'un circuit INTEL 8051. Ce circuit contient un programme de lecture des ports d'entrée pour informer la centrale d'antivol des positions des différents interrupteurs du commutateur 12. Selon une conception connue, et par une autre entrée et une ligne 23, la centrale d'antivol 20 peut échanger des signaux avec une station d'interrogation et de réception 24 qui échange par des lignes 26 et 28 des signaux avec, par exemple, un badge 30 d'accès sans clef au véhicule.

En fonction des échanges avec la centrale d'antivol 20, celle-ci produit sur une liaison 32 un signal de commande de la mise en marche, dans l'un ou l'autre sens, d'un moteur d'antivol 34 qui appuie sur un organe 36 de blocage mécanique de la colonne de direction du véhicule, ou de l'arbre de sortie de la boîte de vitesses.

Par ailleurs, si l'utilisateur oublie le badge radiofréquence 30 à l'intérieur du véhicule, ou s'il omet de manoeuvrer la clef 10 pour mettre en oeuvre une séquence d'activation de l'antivol alors qu'il laisse son badge dans le véhicule, la centrale d'antivol 20 produit l'activation d'un moyen d'alarme d'oubli 38.

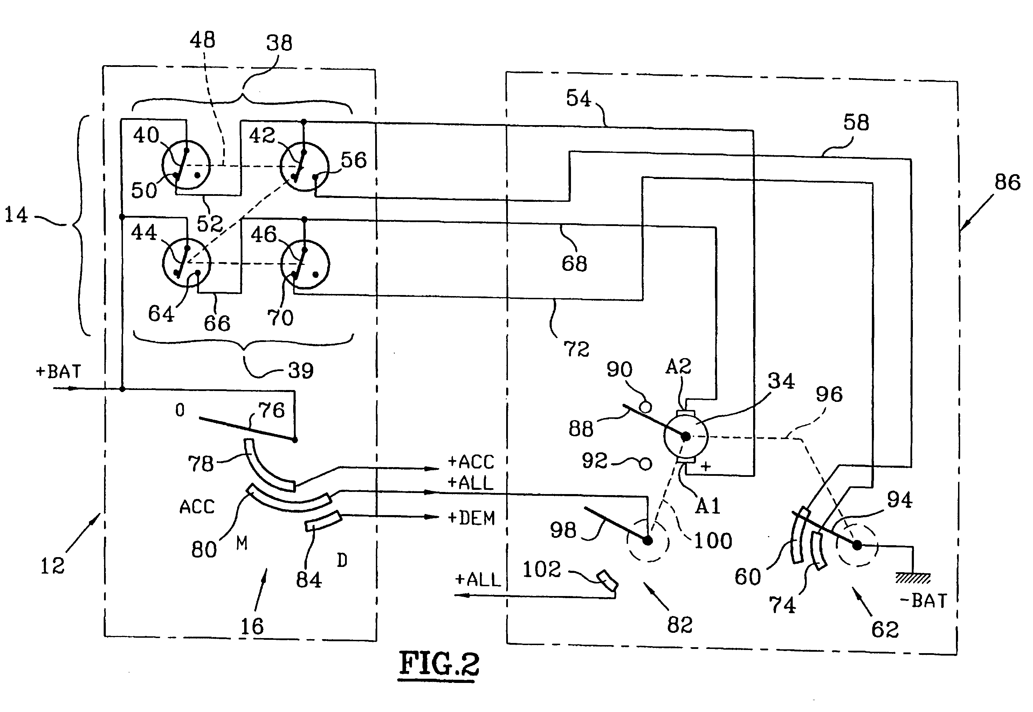

On décrira maintenant un premier mode de réalisation d'un antivol électrique selon l'invention en se reportant au schéma de la figure 2 sur laquelle des composants identiques ou similaires à ceux de la figure 1 sont désignés par les mêmes chiffres de référence.

Conformément au principe de l'antivol électrique selon l'invention, les moyens de commande de la commutation de l'antivol électrique motorisé sont réalisés selon une logique câblée et protégée sans faire appel à une centrale d'antivol selon l'état de la technique.

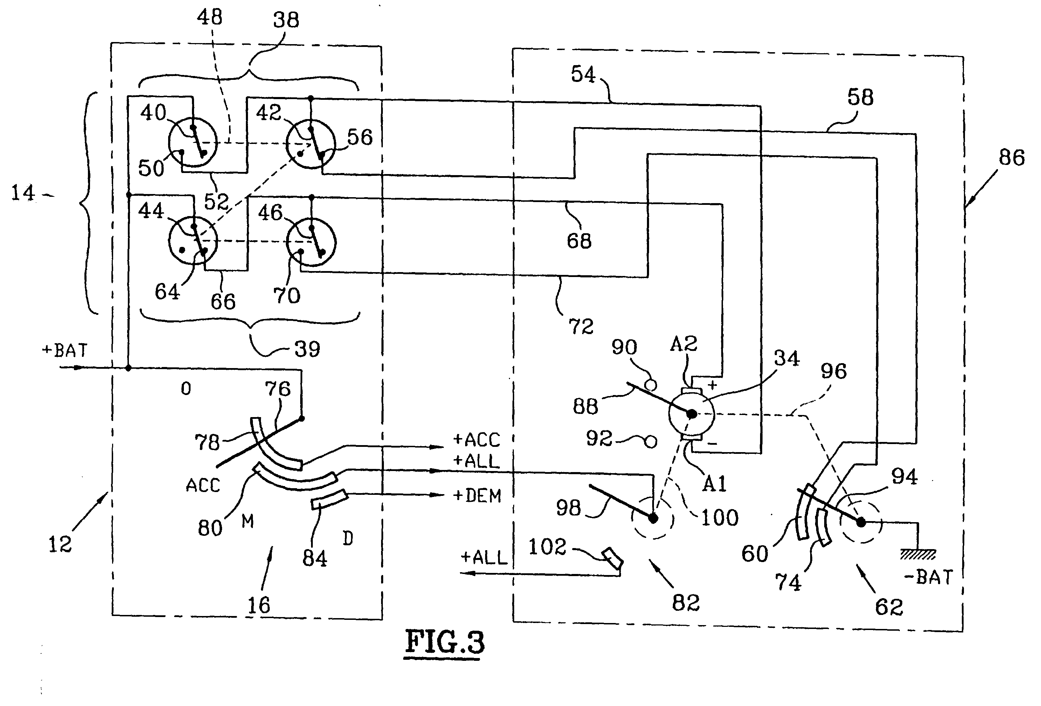

L'interrupteur de clef 14 est constitué par deux paires 38 et 39 de contact mobile 40, 42 et 44, 46 qui sont tous reliés mécaniquement entre eux par une liaison représentée symboliquement par la ligne en pointillés 48 de manière à se déplacer tous les quatre simultanément entre une première position illustrée à la figure 2 correspondant à l'absence de clef dans l'interrupteur de clef 14 et une seconde position illustrée par exemple à la figure 3 correspondant à la présence d'une clef dans l'interrupteur de clef 14.

Le premier contact mobile 40 de la première paire 38 est relié en permanence à une première polarité +BAT de la batterie d'accumulateur du véhicule automobile.

Le contact mobile 40 est susceptible, en l'absence de clef, de coopérer avec un contact fixe 50 qui est relié en permanence au second contact mobile 42 de la première paire 38.

Le contact fixe 50 et le contact mobile 42 sont reliés entre eux par une ligne 52 et ils sont reliés en permanence par une ligne 54 à une première borne A1 d'alimentation électrique du moteur 34 de l'antivol motorisé.

En présence d'une clef dans l'interrupteur de clef 14, et comme cela est notamment illustré à la figure 3, le second contact mobile 42 de la première paire 38 coopère avec un contact fixe 56 qui est relié en permanence, par une ligne 58 à un premier plot fixe 60 de moyens 62 de détection de l'état de l'antivol.

En présence d'une clef, et comme cela est illustré notamment sur la figure 3, le premier contact mobile 44 de la secondaire paire 39 de contacts mobiles, coopère avec un contact fixe 64.

Le premier contact mobile 44 est également relié en permanence à la polarité +BAT de la source d'alimentation en énergie électrique du véhicule.

Le contact fixe 64 est relié par une ligne 66 au second contact mobile 46 de la seconde paire 39.

Le contact fixe 64 et le second contact mobile 46 sont également reliés en permanence, par une ligne 68 à la seconde borne A2 d'alimentation électrique du moteur 34.

En l'absence de clef, et comme on peut le voir sur la figure 2, le second contact mobile 46 de la seconde paire 39 coopère avec un contact fixe 70 qui est relié en permanence, par une ligne 72 à un second plot fixe 74 appartenant aux moyens 62 de détection de l'état de l'antivol.

Dans le mode de réalisation illustré sur les figures, l'interrupteur de commande à positions multiples 16 est un interrupteur du type rotatif qui comporte un contact mobile de commande 76 qui est relié en permanence à la borne +BAT de la batterie du véhicule.

Le contact mobile de commande 76 est susceptible d'occuper successivement plusieurs positions décalées angulairement les unes par rapport aux autres et qui sont repérées "O", "ACC", "M", et "D" sur les figures.

Dans ces positions successives d'arrêt, d'alimentation d'accessoires électriques, de marche, et de démarrage, le contact mobile rotatif de commande 76 est susceptible de coopérer avec une ou plusieurs pistes conductrices agencées en arc de cercle constituant les contacts fixes de l'interrupteur de commande à positions multiples 16.

Lorsque le contact mobile 76 est dans sa position d'arrêt illustrée sur la figure 2, position O, il ne coopère avec aucun contact fixe.

Lorsque le contact mobile de commande 76 est dans la position "ACC", il coopère avec une piste fixe 78 qui est reliée électriquement au circuit +ACC d'alimentation des accessoires du véhicule.

Lorsque l'organe mobile de commande 76 est dans la position de marche "M", il est simultanément en contact avec la piste 78 et avec une piste conductrice 80 qui est reliée au circuit +ALL d'allumage du moteur du véhicule à travers un dispositif d'inhibition 82.

Lorsque le contact mobile de commande 76 est dans la position "D", il est en contact simultanément avec la piste 80 et avec une piste conductrice 84 qui est reliée au circuit +DEM d'alimentation électrique du démarreur qui équipe le moteur à combustion du véhicule.

L'introduction d'une clef de commande dans le commutateur 12 ou toute action simulant une telle introduction de clef a pour effet, dans un premier temps, de provoquer un changement d'état de l'interrupteur de clef 14 puis, sous l'action du conducteur, de provoquer un changement de position du contact mobile de commande 76 appartenant à l'interrupteur de commande à positions multiples 16.

On décrira maintenant plus en détail le module de blocage 86 entouré par une ligne en traits pointillés à la partie droite de la figure 2.

Le module de blocage 86 comporte l'antivol motorisé avec son moteur 34, les moyens 62 de détection de l'état verrouillé ou déverrouillé de l'antivol et le dispositif d'inhibition 82.

Le moteur 34 est un moteur à inversion de sens, par inversion des polarités d'alimentation à ses bornes d'alimentation A1 et A2.

L'arbre de sortie du moteur 34 peut ainsi tourner dans l'un ou l'autre sens entre une position de verrouillage et une position de déverrouillage de l'antivol.

On a représenté de manière schématique sur la figure 2 un contact mobile 88 qui est lié en rotation avec l'arbre de sortie du moteur 34 et qui est susceptible de venir coopérer avec une butée mécanique de verrouillage 90 ou avec une butée mécanique de déverrouillage 92.

Les moyens 62 de détection de l'état de l'antivol sont, dans ce premier mode de réalisation illustré aux figures 2 à 7, constitués par un commutateur rotatif comportant un contact mobile 94 qui est relié en permanence à la seconde polarité-BAT de la batterie du véhicule.

Le contact mobile 94 est lié en rotation à l'arbre de sortie du moteur 34 de l'antivol, cette liaison mécanique étant schématisée par la ligne en pointillés 96.

Selon sa position angulaire, le contact mobile 94 est susceptible de coopérer avec le premier plot fixe 60 réalisé sous la forme d'une piste conductrice, avec le premier plot 60 et simultanément avec le second plot fixe 74 également réalisé sous la forme d'une piste conductrice, ou seulement avec le second plot fixe 74.

Lorsque l'antivol est dans son état verrouillé, le contact mobile 94 ne coopère qu'avec le premier plot fixe de sortie 60 tandis qu'il coopère seulement avec le second plot fixe 74 lorsque l'antivol est en position déverrouillée.

Pour un état intermédiaire de l'antivol, correspondant à une transition, dans l'un ou l'autre sens, entre l'état verrouillé et l'état déverrouillé, le contact mobile 94 coopère simultanément avec les premiers 60 et 74 plots fixes du commutateur rotatif 62.

En fonction de la position angulaire du contact mobile 94, chacune des lignes 58 ou 72 est reliée à la polarité -BAT, ou ces deux lignes 58, 72 sont reliées simultanément à cette même polarité -BAT.

Le dispositif d'inhibition 82 est également constitué par un commutateur rotatif qui comporte un contact mobile 98 qui est lié en rotation à l'arbre de sortie du moteur 34, la liaison mécanique étant schématisée par une ligne en pointillés 100.

Le contact mobile d'inhibition 98 est susceptible de coopérer avec un plot fixe 102 réalisé sous la forme d'une piste conductrice, uniquement lorsque l'antivol est en position déverrouillée.

Le plot fixe 102 est relié au circuit électrique +ALL d'allumage du véhicule, ce dernier circuit n'étant ainsi relié à la première polarité +BAT que lorsque l'antivol est en position déverrouillée, cette liaison étant assurée par l'intermédiaire du contact mobile de commande 76, de la piste conductrice 80, du contact mobile d'inhibition 98 et du plot fixe 102.

Du point de vue fonctionnel, le dispositif d'inhibition 82 est ainsi disposé en aval de l'interrupteur de commande à positions multiples 16.

On décrira maintenant le mode de fonctionnement de l'antivol électrique illustré aux figures 2 à 7.

Dans la position verrouillée illustrée sur la figure 2, et en l'absence de clef dans l'interrupteur de clef 14, la première borne A1 d'alimentation du moteur 34 est reliée électriquement à la polarité +BAT par la ligne 54 et par le premier contact mobile 40 de la première paire 38 de l'interrupteur de clef 14.

La seconde borne A2 d'alimentation du moteur 34 n'est reliée à aucune polarité de la source d'alimentation et le moteur 34 est donc à l'arrêt.

En effet, la ligne 68 relie la borne A2 d'une part au plot fixe 64 qui n'est pas relié à la polarité +BAT et, d'autre part, par l'intermédiaire du second contact mobile 46 de la seconde paire 39 au plot fixe 74 de détection de l'état déverrouillé de l'antivol qui lui non plus n'est pas relié par le contact mobile 94 à la polarité -BAT de la batterie du véhicule.

Sur la figure 3, le conducteur a provoqué, ou simulé, l'introduction d'une clef dans l'interrupteur de clef 14 provoquant immédiatement le changement d'état simultané des quatre contacts mobiles 40, 42, 44 et 46 de l'interrupteur de clef 14.

Du fait de ce changement d'état, la première borne A1 du moteur 34 est reliée à la polarité -BAT par l'intermédiaire de la ligne 54, du second contact mobile 42 de la première paire 38, de la ligne 58, du plot fixe 60 de détection de l'état verrouillé de l'antivol et par l'intermédiaire du contact mobile 94.

La seconde borne A2 du moteur 34 est reliée à la polarité +BAT par l'intermédiaire de la ligne 68, de la ligne 66 et du premier contact mobile 44 de la seconde paire 39.

Les bornes A1 et A2 d'alimentation du moteur 34 sont ainsi reliées respectivement aux polarités -BAT et +BAT et le moteur commence à tourner, dans le sens anti-horaire en considérant la figure 3, de sa position de verrouillage vers sa position de déverrouillage de l'antivol.

Simultanément, l'utilisateur peut provoquer la rotation du contact mobile de commande 76 pour l'amener en contact avec la piste conductrice 78 et provoquer l'alimentation des accessoires électriques du véhicule.

Si l'utilisateur continue d'entraîner en rotation le contact mobile 76, et qu'il l'amène en contact avec la piste 80, il ne se produit aucune alimentation du circuit d'allumage +ALL car le contact mobile d'inhibition 98 est dans sa position de repos dans laquelle il interrompt l'alimentation du circuit +ALL.

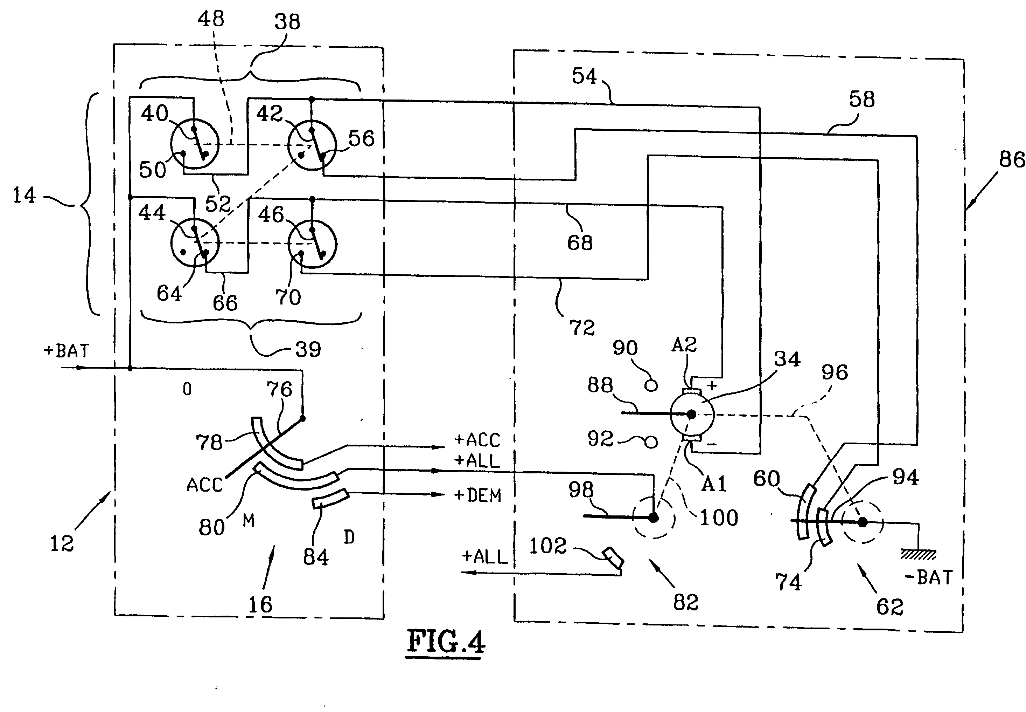

En considérant la figure 4, le moteur 34 est illustré dans un état intermédiaire, en cours de rotation, entre la position de verrouillage dont il est parti et la position de déverrouillage qu'il va atteindre.

Dans cette position intermédiaire, on constate que le contact mobile 94 du commutateur rotatif 62 est simultanément en contact avec les deux plot fixe de sortie 60 et 74.

Tandis que le contact mobile d'inhibition 98 est dans une position intermédiaire dans laquelle il n'est pas encore en contact avec le plot fixe 102 et dans laquelle l'alimentation électrique du circuit d'allumage +ALL n'est toujours pas établie.

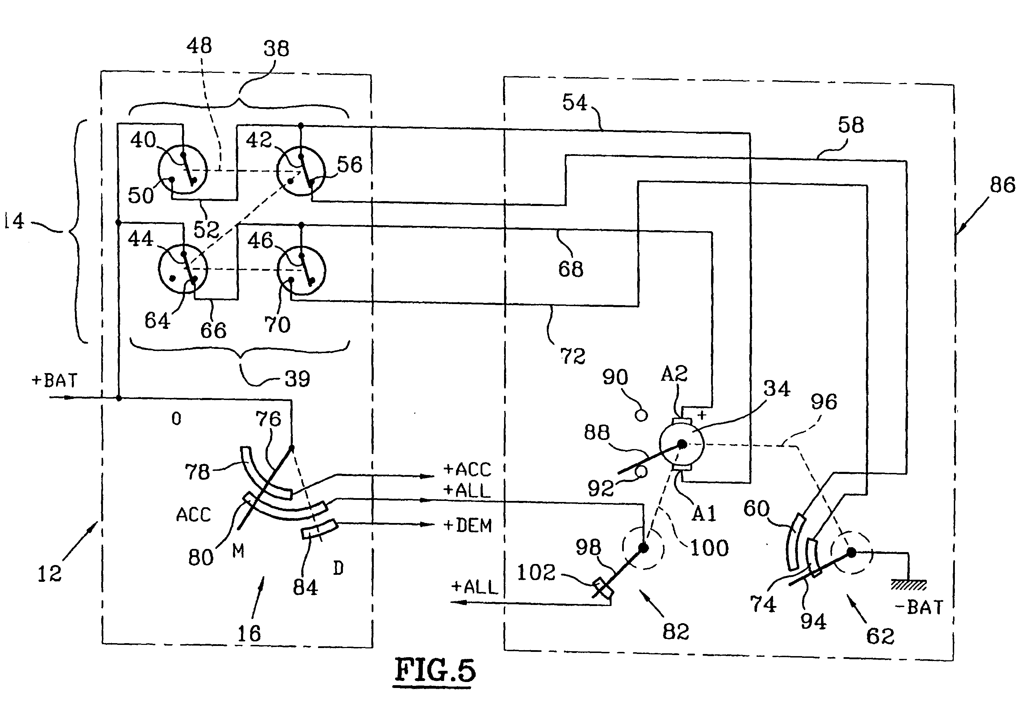

La rotation du moteur 34, dans le sens anti-horaire en considérant la figure 4, se poursuit jusqu'à ce qu'il atteigne la position de déverrouillage illustrée sur la figure 5 dans laquelle son organe mobile 88 est en butée contre la butée mécanique de déverrouillage 92.

Dans cette position angulaire arrêtée de l'arbre de sortie du moteur 34, le contact mobile 94 du commutateur rotatif 62 est arrêté dans sa position angulaire extrême opposée à celle qu'il occupait à la figure 2 et il n'est plus en contact qu'avec le second plot fixe de sortie 74.

Dans cet état déverrouillé, on constate que la première borne A1 d'alimentation du moteur 34 n'est plus reliée à la polarité -BAT car le contact mobile 94 n'est plus en contact avec le premier plot fixe de sortie 60.

La seconde borne A2 d'alimentation du moteur 34 demeure quant à elle reliée à la polarité +BAT.

Ainsi, dès que le moteur 34 atteint sa position de déverrouillage, son alimentation électrique est interrompue et il s'arrête.

Dans cette position de déverrouillage, on constate que le contact mobile d'inhibition 98 est en contact avec le plot fixe 102 et que le circuit +ALL d'allumage du moteur est relié à la piste conductrice 80 de l'interrupteur de commande à positions multiples 16.

Ainsi, si l'utilisateur amène le contact mobile de commande 76 dans la position M, il alimente le circuit d'allumage +ALL et si il l'amène dans la position D, il alimente simultanément le circuit d'allumage +ALL et le circuit d'alimentation électrique +DEM du démarreur du véhicule pouvant ainsi provoquer le démarrage du moteur à combustion du véhicule tout en ayant la certitude que l'antivol du véhicule a préalablement été déverrouillé.

Après avoir fait démarrer le moteur, le contact mobile de commande 76 reste dans la position M correspondant à la marche du moteur.

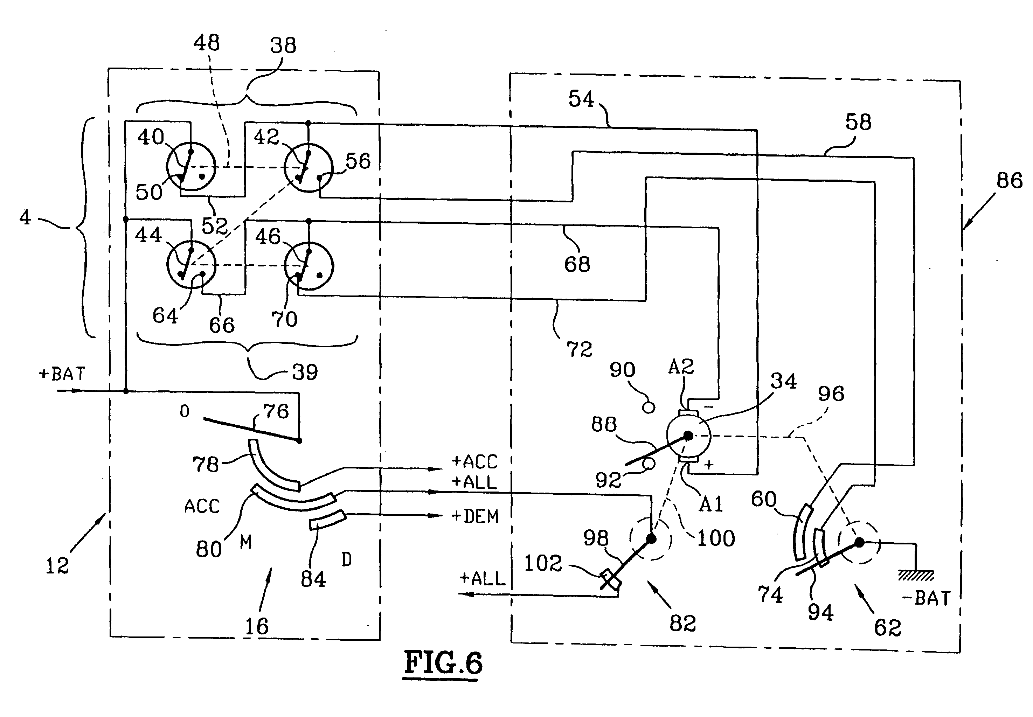

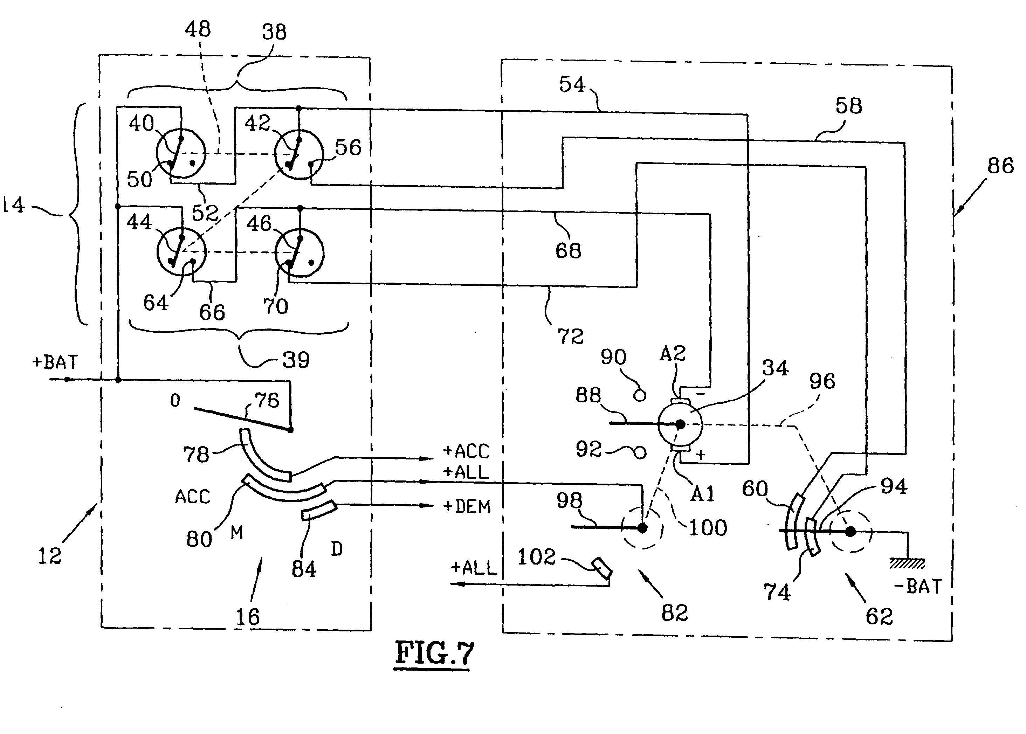

On décrira maintenant le fonctionnement de l'antivol, en référence aux figures 6 et 7, lorsque le conducteur quitte le véhicule après l'avoir arrêté.

L'opération de verrouillage, en partant de la position illustrée sur la figure 5, consiste à arrêter le véhicule en ramenant le contact mobile de commande 76 dans sa position O puis en extrayant la clef, ou en simulant cette extraction hors de l'interrupteur de clef.

Après le retrait de la clef, et comme cela est illustré sur la figure 6, les quatre contacts mobiles 40, 42, 44 et 46 de l'interrupteur de clef 14 ont changé simultanément d'état pour retrouver l'état correspondant à l'absence de clef illustré sur la figure 6.

Ce changement d'état provoque immédiatement une alimentation électrique du moteur 34 en vue de provoquer sa rotation.

En effet, la première borne A1 du moteur 34 est reliée à la polarité +BAT par la ligne 54, la ligne 52 et le premier contact mobile 40 de la première paire de contacts 38 de l'interrupteur de clef 14.

La seconde borne A2 d'alimentation du moteur 34 est reliée à la polarité -BAT par la ligne 62, le second contact mobile 46 de la seconde paire 39 de contacts, la ligne 72, le second plot fixe 74 et le contact mobile 94 du commutateur rotatif 62.

Du fait du raccordement des bornes A1 et A2 du moteur 34 aux polarités +BAT et -BAT, respectivement, le moteur 34 démarre et tourne dans le sens horaire en considérant la figure 6.

Cette rotation s'effectue pour permettre un changement d'état de l'antivol de son état déverrouillé illustré à la figure 6 vers son état verrouillé illustré à la figure 2.

Ce changement d'état passe par un état intermédiaire de transition qui est illustré sur la figure 7.

Dans cette position intermédiaire, on constate que le contact mobile d'inhibition 98 a interrompu l'alimentation électrique du circuit d'allumage +ALL dès que le moteur a quitté sa position angulaire de déverrouillage, interdisant ainsi toute mise en marche accidentelle du moteur du véhicule.

La rotation du moteur 34, dans le sens horaire en considérant la figure 7, se poursuit jusqu'à ce qu'il atteigne sa position angulaire de verrouillage illustrée à la figure 2 dans laquelle l'élément mobile 88 est en butée contre la butée mécanique de verrouillage 90 et dans laquelle la borne A2 n'est plus reliée à la polarité -BAT car le contact mobile 94 du commutateur rotatif 62 n'est plus en contact avec le premier plot fixe de sortie 60.

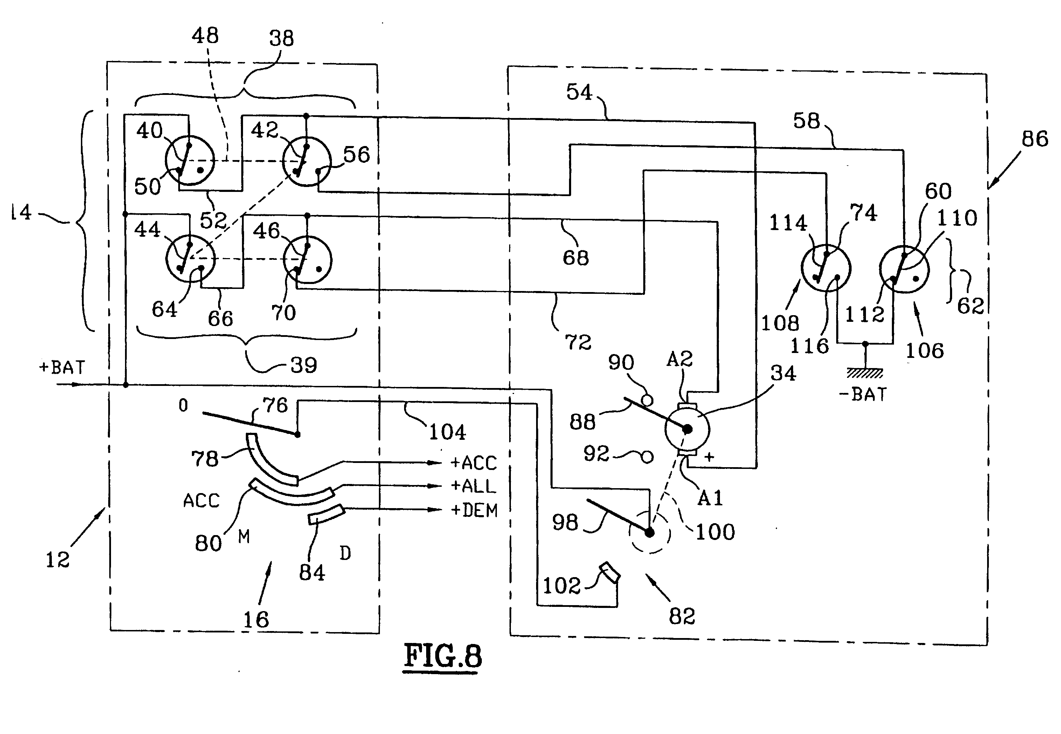

On décrira maintenant le second mode de réalisation illustré aux figures 8 à 13 sur lesquelles des composants identiques ou similaires à ceux illustrés aux figures 2 à 7 sont désignés par les mêmes chiffres de référence.

Comme on peut le constater en considérant la partie gauche des figures 8 à 13, l'interrupteur à positions multiples de commande est d'une conception légèrement différente de celle décrite précédemment dans la mesure où le contact mobile 76 est relié à la polarité +BAT de la batterie du véhicule avec interposition du commutateur rotatif d'inhibition 82.

A cet effet, le contact mobile de commande 76 est relié par une ligne 104 au contact mobile d'inhibition 98.

Par ailleurs, les pistes conductrices 78, 80 et 84 sont chacune reliées directement au circuit électrique correspondant du véhicule.

Comme on peut le constater en considérant la partie droite des figures 8 à 13, les moyens 62 de détection de l'état de l'antivol sont d'une conception différente de celle du commutateur rotatif décrit en référence aux figures 2 à 7.

Dans ce second mode de réalisation, les moyens 62 comportent un interrupteur 106 de détection du déverrouillage de l'antivol et un interrupteur 108 de détection du verrouillage de l'antivol.

L'interrupteur 106 comporte un contact mobile 110 qui est relié au premier plot fixe 60 et qui, lorsque l'antivol n'est pas en position déverrouillée, coopère avec un contact fixe 112 relié à la seconde polarité -BAT de la batterie du véhicule.

L'interrupteur de détection du verrouillage 108 comporte un contact mobile 114 qui est relié au second plot fixe de sortie 74 et qui, lorsque l'antivol n'est pas dans son état verrouillé illustré à la figure 8, est susceptible de coopérer avec un contact fixe 116 relié en permanence à la polarité-BAT.

Dans l'état verrouillé et en l'absence de clef illustré à la figure 8, la première borne A1 d'alimentation du moteur 34 est reliée à la polarité +BAT de la batterie du véhicule tandis que sa seconde borne A2 d'alimentation n'est pas reliée à la polarité -BAT car le contact mobile 114 ne coopère pas avec le contact fixe 116.

Le moteur 34 est donc à l'arrêt.

Parallèlement, le contact mobile de commande 76 n'est pas relié à la polarité +BAT.

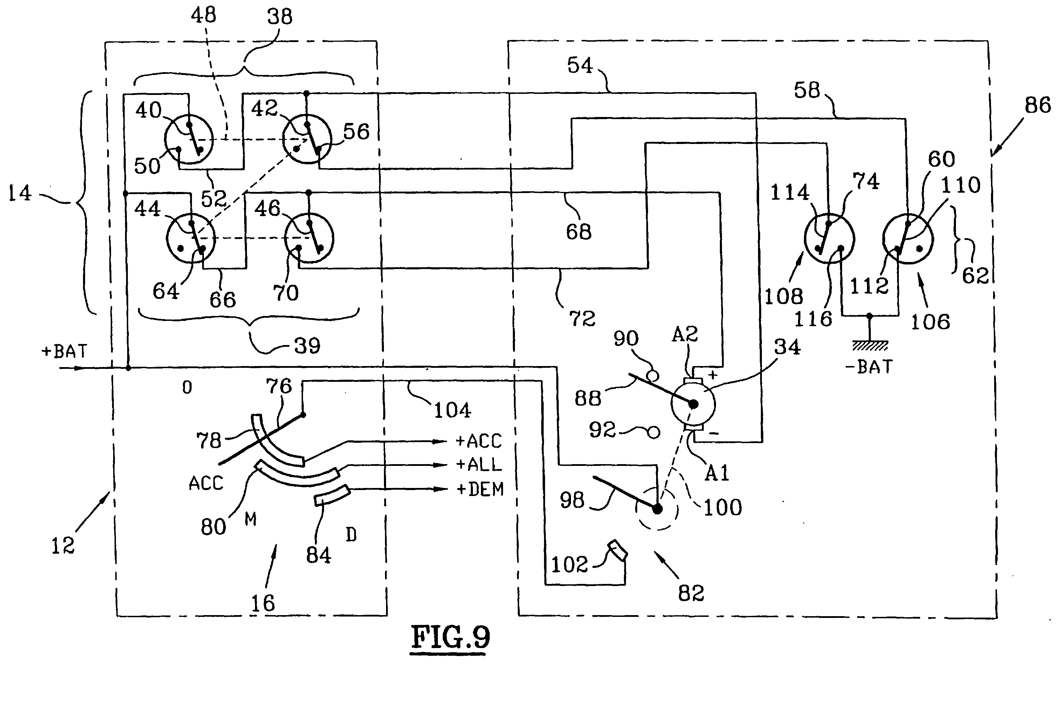

Lorsque le conducteur introduit une clef, et comme cela est illustré sur la figure 9, il provoque le changement d'état de l'interrupteur de clef 14 ce qui a pour effet de relier la première borne A1 d'alimentation du moteur 34 à la polarité -BAT par l'intermédiaire du second contact mobile 42 de la première paire 38 et par l'intermédiaire du contact mobile 110 de l'interrupteur de détection du déverrouillage 106.

Le moteur 34 est donc alimenté et il commence sa rotation dans le sens anti-horaire en considérant la figure 9.

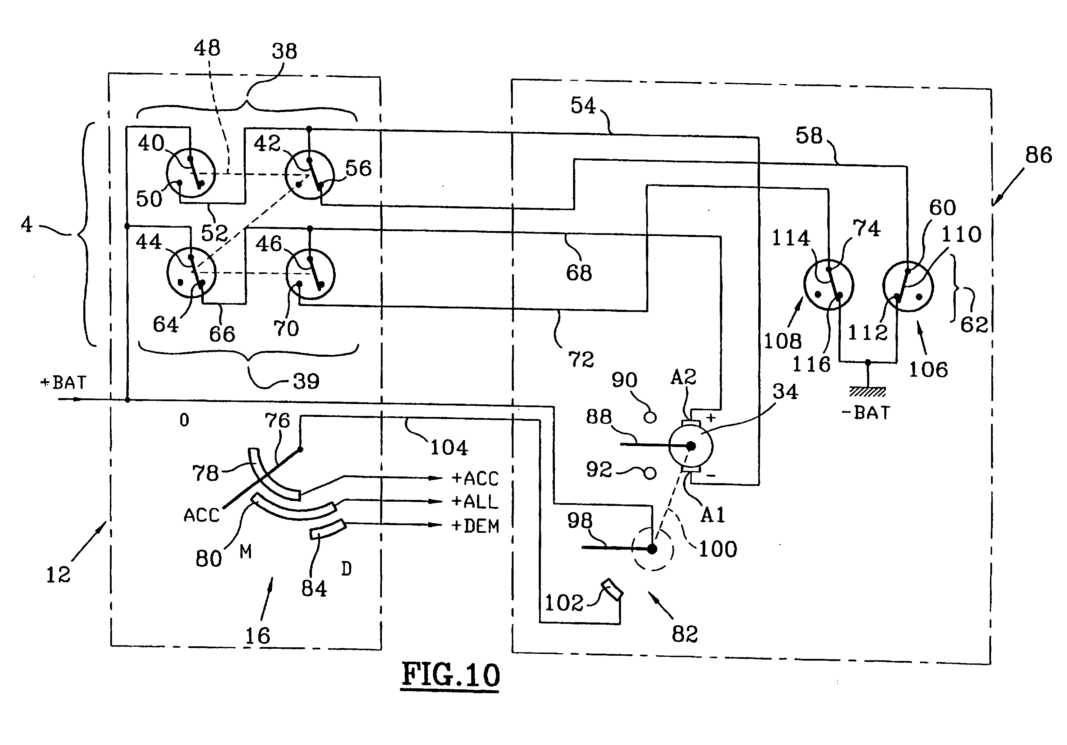

Dans la position intermédiaire entre l'état verrouillé et l'état déverrouillé illustré sur la figure 10, l'interrupteur de détection du verrouillage 108 a changé d'état et son contact mobile 114 coopère avec le contact fixe 116.

Le raccordement du contact mobile de commande 76 est toujours inhibé par le dispositif d'inhibition 82 et la rotation du moteur 34 se poursuit en direction de sa position de déverrouillage.

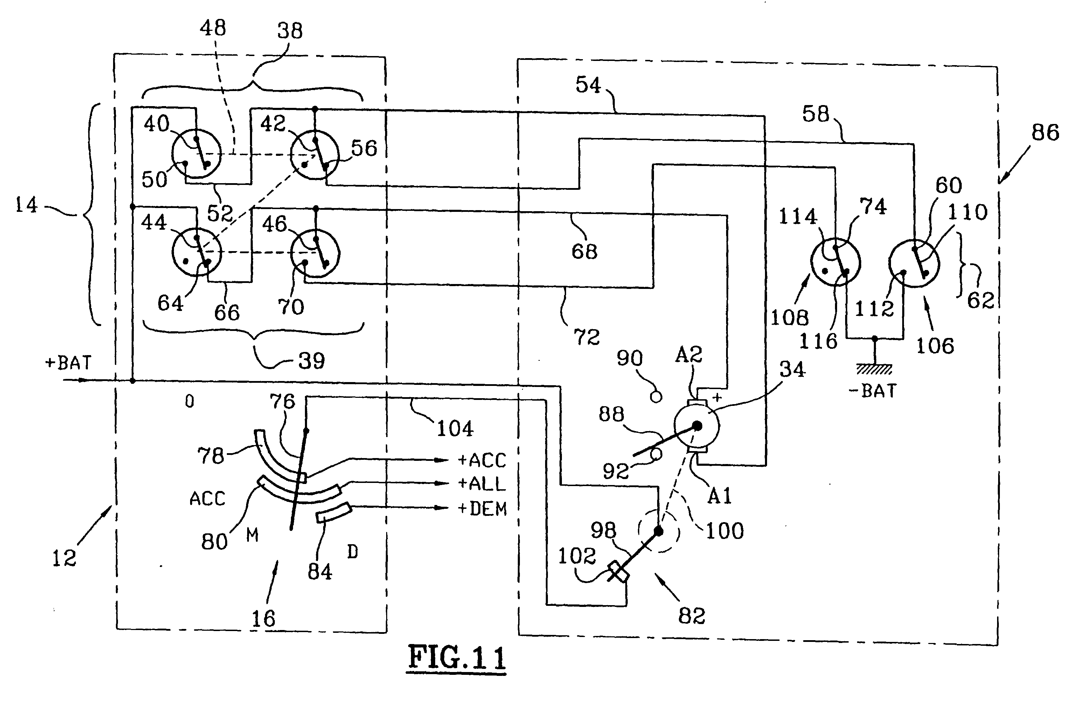

Lorsque cette position de déverrouillage est atteinte, et comme cela est illustré sur la figure 11, l'interrupteur de détection du déverrouillage 106 change d'état et son contact mobile 110 n'est plus en contact avec le contact fixe 112.

Dans cette position déverrouillée, la première borne A1 d'alimentation du moteur 34 n'est plus reliée à la polarité -BAT de la batterie et le moteur s'arrête.

Simultanément, le contact mobile d'inhibition 98 est en contact avec le plot fixe 102 et le contact mobile 76 est relié à la polarité +BAT de la batterie du véhicule, permettant le raccordement des différents circuits électriques du véhicule à cette polarité en fonction de la position angulaire occupée par le contact mobile de commande 76 de l'interrupteur à positions multiples de commande 16.

Lorsque le conducteur désire à nouveau provoquer un verrouillage de l'antivol, il retire la clef de l'interrupteur 14 qui provoque le changement d'état simultané des quatre interrupteurs mobiles de l'interrupteur de clef 14.

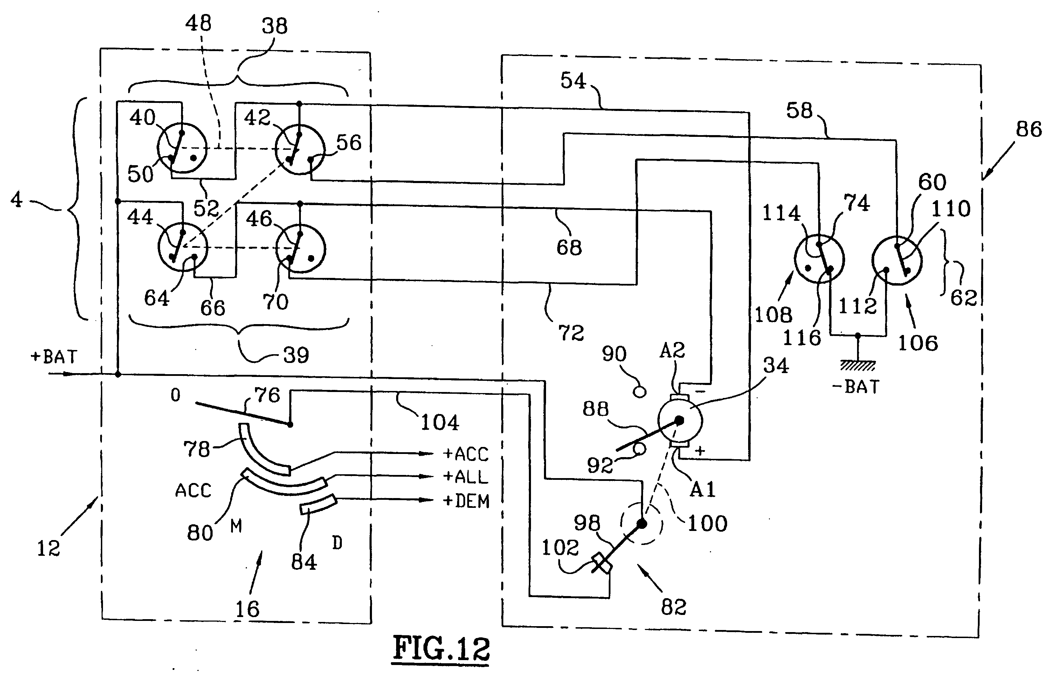

Dans cette position illustrée sur la figure 12, la première borne A1 d'alimentation du moteur 34 est alors reliée à la polarité +BAT de la batterie du véhicule tandis que la seconde borne A2 d'alimentation du moteur 34 est reliée à la polarité-BAT par le second contact mobile 46 de la seconde paire 39 et par le contact mobile 114 de l'interrupteur 108 de détection du verrouillage.

Le moteur 34 est ainsi alimenté et il commence à tourner dans le sens horaire, en considérant la figure 12, pour quitter sa position de déverrouillage et retourner vers sa position de verrouillage illustrée à la figure 8.

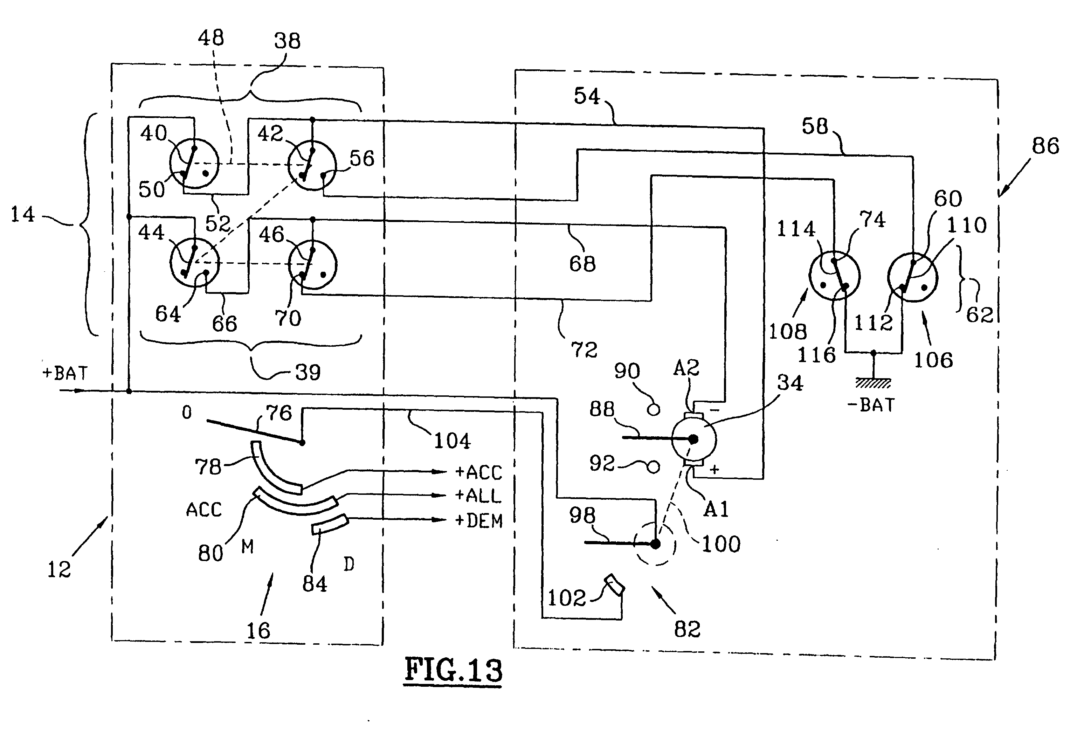

Dès que le moteur 34 quitte sa position de déverrouillage, et comme cela est illustré sur la figure 13, le dispositif d'inhibition 82 interrompt immédiatement la liaison électrique entre le contact mobile de commande 76 et la polarité +BAT.

Le début de cette rotation provoque également le changement d'état immédiat de l'interrupteur de détection du déverrouillage 106.

La rotation du moteur 34 se poursuit, dans le sens horaire, jusqu'à ce qu'il atteigne à nouveau sa position verrouillée illustrée à la figure 8, la fin de cette rotation provoquant à nouveau le changement d'état de l'interrupteur de détection du verrouillage dont le contact mobile 114 quitte le contact fixe 116 pour occuper sa position de repos illustrée sur la figure 8.

## Revendications

1. Antivol électrique perfectionné (10), notamment pour un véhicule automobile, du type comportant :
- un commutateur d'antivol (12) pour la commande du démarrage (+DEM) du moteur du véhicule et de l'alimentation de différents circuits électriques du véhicule (+ACC, +ALL) ;
- un antivol motorisé comportant un moteur électrique (34) d'entraînement d'un organe de blocage (36) entre une position verrouillée et une position déverrouillée,
**caractérisé en ce qu'**il comporte des moyens (62) de détection de l'état de l'antivol et des moyens d'interrupteurs agencés de manière que le moteur de électrique (34) de l'antivol ne peut pas être alimenté électriquement lorsque l'antivol est en position déverrouillée et le commutateur d'antivol est dans une position d'alimentation électrique d'allumage du moteur (+ALL).

## Patentansprüche

1. Verbesserte, elektrische Diebstahlsicherung (10), insbesondere für ein Kraftfahrzeug, vom Typ mit:
- einem Diebstahlsicherungsschalter (12) zum Steuern des Starts (+DEM) des Fahrzeugmotors und zur Stromversorgung der verschiedenen Stromkreise (+ACC, +ALL) des Fahrzeugs,
- einer motorisierten Diebstahlsicherung, die einen Elektromotor (34) zum Antreiben eines Sicherungsglieds (36) zwischen einer Verriegelungsstellung und einer Entriegelungsstellung enthält,
**dadurch gekennzeichnet, dass** sie Mittel (62) zum Erfassen des Zustands der Diebstahlsicherung und Schaltermittel enthält, die so angeordnet sind, dass der Elektromotor (34) der Diebstahlsicherung nicht elektrisch versorgt werden kann, wenn die Diebstahlsicherung sich in Entriegelungsstellung befindet und der Diebstahlsicherungsschalter sich in einer Stromversorgungsstellung (+ALL) zum Zünden des Motors befindet.

## Claims

1. An improved electrical anti-theft system (10), especially for a motor vehicle, of the type comprising:
- an anti-theft switch (12) for controlling starting (+DEM) of the engine of the vehicle and power supply to various electrical circuits of the vehicle (+ACC, +ALL);
- a motorised anti-theft device comprising an electric motor (34) for displacing a stop member (36) between a locked position and an unlocked position,
**characterised in that** it includes means (62) for detecting the state of the anti-theft system and interrupter means arranged in such a way that the electric motor (34) of the anti-theft device is unable to be energised electrically when the anti-theft device is in its unlocked position and the anti-theft switch is in position for supply of electrical power to the ignition of the engine (+ALL).
